# FASCICULE DE BREVET EUROPEEN

(11) **EP 0 861 581 B1**
(45) Date de publication et mention de la délivrance du brevet: **28.05.2008**
(21) Numéro de dépôt: 98440020.0
(22) Date de dépôt: 10.02.1998
(51) Int. Cl.: A01D 34/66, A01D 43/10

(54) **Machine agricole de coupe comportant un dispositif de suspension perfectionné du mécanisme de coupe**
Landwirtschaftliche Mähmaschine mit verbesserter Aufhängungsvorrichtung des Mähwerks
An agricultural cutting machine comprising an improved suspension device for the cutting mechanism

(30) Priorité: 14.02.1997 FR 9701922
(43) Date de publication de la demande: 02.09.1998
(73) Titulaire: KUHN S.A., 67700 Saverne (FR)
(72) Inventeur: Walch, Martin, 67490 Dettwiller (FR)

(56) Documents cités:
- EP-A- 0 429 383
- EP-A- 0 619 063
- EP-A- 0 634 092
- DE-A- 4 113 631
- DE-U- 9 413 007
- FR-A- 2 434 554
- FR-A- 2 614 755
- GB-A- 1 583 983
- GB-A- 2 007 955

## Description

La présente invention se rapporte à une machine agricole de coupe destinée à être déplacée suivant une direction de travail et comportant :
- un châssis,
- un mécanisme de récolte destiné à reposer sur le sol durant le travail ledit mécanisme de récolte étant muni d'organes de coupe et d'organes de traitement du produit coupé, ledit mécanisme de récolte présentant un centre des masses,
- un dispositif de suspension liant ledit mécanisme de récolte au châssis et comportant un organe de suspension inférieur et un organe de suspension supérieur formant un quadrilatère articulé qui permet au mécanisme de récolte de se déplacer par rapport au châssis, ledit organe de suspension inférieur et ledit organe de suspension supérieur étant liés chacun au châssis au moyen d'une première articulation respective et au mécanisme de récolte au moyen d'une deuxième articulation respective, lesdites premières articulations et lesdites deuxièmes articulations présentant chacune un axe géométrique sensiblement horizontal et transversal à la direction de travail.

Une telle machine de coupe est connue des documents EP-A-0 619 063 et GB-A-2 007 955. Une autre machine agricole de coupe est encore décrite dans le document US 4,473,993. Celle-ci comporte :
- un châssis roulant sur le sol,
- un mécanisme de récolte muni d'une barre de coupe à sections coupantes, d'un rabatteur et d'une vis d'andainage, et
- un dispositif de suspension liant le mécanisme de récolte au châssis et comportant deux bielles de suspension inférieures et une bielle de suspension supérieure formant un quadrilatère articulé qui permet au mécanisme de récolte de se déplacer par rapport au châssis.

Les deux bielles de suspension inférieures sont liées chacune au châssis au moyen d'une première articulation respective et au mécanisme de récolte au moyen d'une deuxième articulation respective. En outre, elles s'étendent chacune dans le voisinage d'une extrémité longitudinale respective du mécanisme de récolte.

La bielle de suspension supérieure est également liée au châssis au moyen d'une première articulation et au mécanisme de récolte au moyen d'une deuxième articulation. Cette bielle de suspension supérieure s'étend, en vue de dessus, dans la partie centrale du châssis et du mécanisme de récolte. Elle est, du reste, réalisée sous forme de vérin hydraulique en vue du réglage de l'angle de coupe de la barre de coupe.

Ce vérin hydraulique est un vérin simple effet. Dans ce but, les deuxièmes articulations des deux bielles de suspension inférieures sont implantées de telle sorte qu'une augmentation de l'angle de coupe est assurée par le poids du mécanisme de récolte, tandis que la diminution dudit angle de coupe est réalisée par le vérin.

Pour que le poids du mécanisme de récolte puisse effectivement assurer correctement l'augmentation de l'angle de coupe, il faut que le centre des masses du mécanisme de récolte se trouve à une distance conséquente devant les deuxièmes articulations des deux bielles de suspension inférieures.

Ceci signifie, qu'au transport notamment, la bielle de suspension supérieure transmet des efforts non négligeables sur le châssis, lesquels efforts peuvent être une source de problème de tenue mécanique. En cherchant à renforcer les divers éléments pour qu'ils soient capables d'encaisser ces efforts, on risque d'augmenter substantiellement le poids de la machine.

Au travail, cette disposition peut entraîner un manque de stabilité du mécanisme de coupe qui est également préjudiciable à la bonne tenue mécanique des divers éléments et qui peut avoir une influence néfaste sur la qualité du travail réalisé. Ce phénomène est d'ailleurs d'autant plus sensible que les vitesses d'avance sont rapides.

Le but de la présente invention consiste à remédier à ce problème.

A cet effet, la machine agricole de coupe selon l'invention comprend les caractéristiques de la revendication 1.

Au transport, l'organe de suspension supérieur n'est donc quasiment pas sollicité.

Au travail, le mécanisme de récolte a une stabilité remarquable, même à grande vitesse d'avance.

Dans une machine agricole de coupe telle que celle de l'invention, il pourra être avantageux de pouvoir régler l'angle de coupe des organes de coupe en fonction des conditions de travail rencontrées. Ceci permet d'obtenir une qualité de travail optimale et d'adapter la hauteur de coupe des organes de coupe au type de terrain dans lequel opère la machine de coupe. En coupant trop près du sol, on provoque, dans certains cas, une usure excessive des organes de coupe et la souillure du produit coupé par de la terre.

A cet effet, il pourra donc être prévu que l'organe de suspension supérieur et (ou) le châssis et (ou) le mécanisme de récolte comporte(nt) un moyen permettant de régler l'angle de coupe des organes de coupe. Il pourra ainsi être prévu que l'organe de suspension supérieur soit de longueur variable et (ou) que la première articulation dudit organe de suspension supérieur puisse être implantée dans diverses positions prévues sur le châssis et (ou) que la deuxième articulation dudit organe de suspension supérieur puisse être implantée dans diverses positions prévues sur le mécanisme de récolte. Dans une réalisation préférentielle, ledit organe de suspension supérieur sera tout simplement formé par un vérin mécanique ou par un vérin hydraulique.

Etant donné que dans une telle machine agricole de coupe, l'axe géométrique de la deuxième articulation de l'organe de suspension inférieur passe par le centre des masses du mécanisme de récolte, le réglage de l'angle de coupe pourra se faire sans effort et sans qu'il soit nécessaire, pour cela, de prévoir un outil approprié.

Dans la machine agricole de coupe selon l'invention, il pourra également être prévu que la deuxième articulation de l'organe de suspension inférieur s'étende au-dessus, de préférence à la verticale ou sensiblement à la verticale, de la zone de contact du mécanisme de récolte avec le sol. Lors du réglage de l'angle de coupe des organes de coupe, le déplacement en hauteur de la deuxième articulation de l'organe de suspension inférieur par rapport au sol pourra ainsi être faible, voire nul.

Dans une réalisation avantageuse d'une machine agricole de coupe selon invention, il pourra être prévu :
- que l'organe de suspension inférieur comporte deux bielles de suspension inférieures s'étendant chacune dans le voisinage d'une extrémité longitudinale respective du mécanisme de récolte, et
- que l'organe de suspension supérieur soit constitué d'une bielle de suspension supérieure.

Il pourra, de surcroît, être avantageusement prévu que ladite bielle de suspension supérieure s'étende dans le voisinage de l'une des extrémités longitudinales du mécanisme de récolte.

Cette implantation sera très avantageuse lorsque la machine agricole de coupe comporte un timon destiné à être lié, à son extrémité avant, à un véhicule tracteur, et articulé à son extrémité arrière sur le châssis à l'aide d'une articulation s'étendant sensiblement dans un le plan vertical médian dudit châssis.

Cette implantation sera également très avantageuse, lorsque la bielle de suspension supérieure doit servir au réglage de l'angle de coupe des organes de coupe, car elle est alors facilement accessible par l'utilisateur.

Il pourra en outre être prévu que l'organe de suspension inférieur soit plus long que l'organe de suspension supérieur.

Dans une réalisation très avantageuse l'organe de suspension inférieur et l'organe de suspension supérieur forment un quadrilatère articulé et convergent en un point de convergence situé en avant du mécanisme de récolte et au-dessus du sol.

Un tel quadrilatère de suspension permet au mécanisme de récolte de bien suivre le relief du sol. L'effort de frottement entre le mécanisme de récolte et le sol participe en outre à l'allégement du mécanisme de récolte.

Dans les machines agricoles de coupe selon l'invention, il est prévu d'alléger le mécanisme de récolte. La valeur de l'allégement est, dans certains cas, primordiale pour la qualité de la coupe et dépend des conditions de travail (nature du terrain, nature du produit à récolter...).

Un allégement trop important ne permet pas au mécanisme de récolte de rester continuellement en contact avec le sol. Il en résultera une coupe irrégulière non acceptable.

Un allégement insuffisant, par contre, augmente les risques de bourrage et, selon le type d'organes de coupe, de création de traînées de produit non coupé par suite d'accumulation de terre sur le bord frontal des organes de coupe, augmente la puissance qui est à développer pour tirer la machine agricole de coupe durant le travail, augmente l'usure, diminue la qualité du produit récolté et, enfin, maltraite le tapis végétal.

A cet effet, il est prévu que ladite machine agricole de coupe comporte en sus un dispositif d'allégement du mécanisme de récolte reportant une partie du poids du mécanisme de récolte sur le châssis. Ce dispositif d'allégement pourra agir entre le mécanisme de récolte et le châssis.

En outre, le dispositif d'allégement est lié au mécanisme de récolte au niveau de l'axe géométrique de la deuxième articulation de l'organe de suspension inférieur ou dans le voisinage dudit axe géométrique. Ainsi, l'intensité de l'allégement procuré par le dispositif d'allégement ne se modifiera pas ou du moins très peu lorsqu'il sera prévu de pouvoir régler l'angle de coupe des organes de coupe.

Mais ceci veut également dire que la ligne d'action du dispositif d'allégement passera par l'axe géométrique de la deuxième articulation de l'organe de suspension inférieur ou à proximité immédiate dudit axe géométrique qui passe lui-même par le centre des masses du mécanisme de récolte.

Ce dispositif d'allégement pourra d'ailleurs avantageusement comporter un mécanisme de réglage de l'intensité de l'allégement.

Il pourra, en outre, comporter au moins un organe élastiquement déformable suivant son axe longitudinal.

Cet axe longitudinal du (des) organe(s) élastiquement déformable(s) fera avantageusement, en position de travail normale du mécanisme de récolte, un angle compris entre 25° et 55° par rapport à un plan horizontal. Avec une telle implantation, l'intensité de l'allégement procuré par l'(les) organe(s) élastiquement déformable(s) ne variera pas substantiellement dans la plage de débattement prévue pour le mécanisme de récolte durant le travail.

Dans une réalisation avantageuse, il pourra être prévu que chaque dispositif d'allégement comporte au moins un organe élastiquement déformable à chaque extrémité longitudinale du mécanisme de récolte.

Il pourra également être prévu que ledit (lesdits) organe(s) élastiquement déformable(s) est (sont) constitué (constitués chacun) d'au moins un ressort mécanique de traction.

Il pourra, en outre, être prévu que ledit (lesdits) organe(s) élastiquement déformable(s) soit (soient) constitué (constitués chacun) de deux ressorts mécaniques de traction s'étendant l'un dans l'autre. On obtient ainsi un organe élastiquement déformable compact, mais néanmoins capable de développer une force importante et possédant une courbe de déformation relativement plate.

Dans le cas où un organe élastiquement déformable est constitué de plusieurs ressorts mécaniques de traction, le mécanisme de réglage de l'allégement comportera avantageusement un organe de réglage de l'allégement commun à tous ces ressorts.

L'invention concerne tout particulièrement, mais de manière non limitative, les machines agricoles de coupe dont le châssis s'appuie sur le sol au moyen de roues articulées chacune sur ledit châssis à l'aide d'un bras de roue respectif. Dans ces machines agricoles de coupe, il est en général prévu un vérin hydraulique qui est implanté entre chaque bras de roue et le châssis pour soulever ledit châssis en vue du transport notamment. Dans ce cas, il pourra aussi être avantageusement prévu que lesdits vérins hydrauliques agissent directement ou indirectement sur l'organe de suspension inférieur.

Comme dit, l'invention se rapporte aux machines agricoles de coupe en général. Elle s'adresse néanmoins tout particulièrement aux faucheuses aptes à travailler à des vitesses d'avance élevées telles que les faucheuses rotatives.

D'autres caractéristiques de l'invention ressortent de la description suivante d'un exemple de réalisation non limitatif faite en référence au dessin annexé dans lequel :
- la **figure 1** montre une vue de dessus partielle d'une machine agricole de coupe selon l'invention dans une position de travail ;
- la **figure 2** montre une vue latérale de ladite machine agricole de coupe, le mécanisme de récolte et le châssis étant en position de travail normale ;
- la **figure 3** montre une coupe d'un organe élastiquement déformable du dispositif d'allégement du mécanisme de récolte ;
- la **figure 4** est une vue similaire à celle de la figure 2, le mécanisme de récolte et le châssis étant toutefois éloignés du sol ;
- la **figure 5** montre une autre forme de réalisation de la bielle de suspension supérieure.

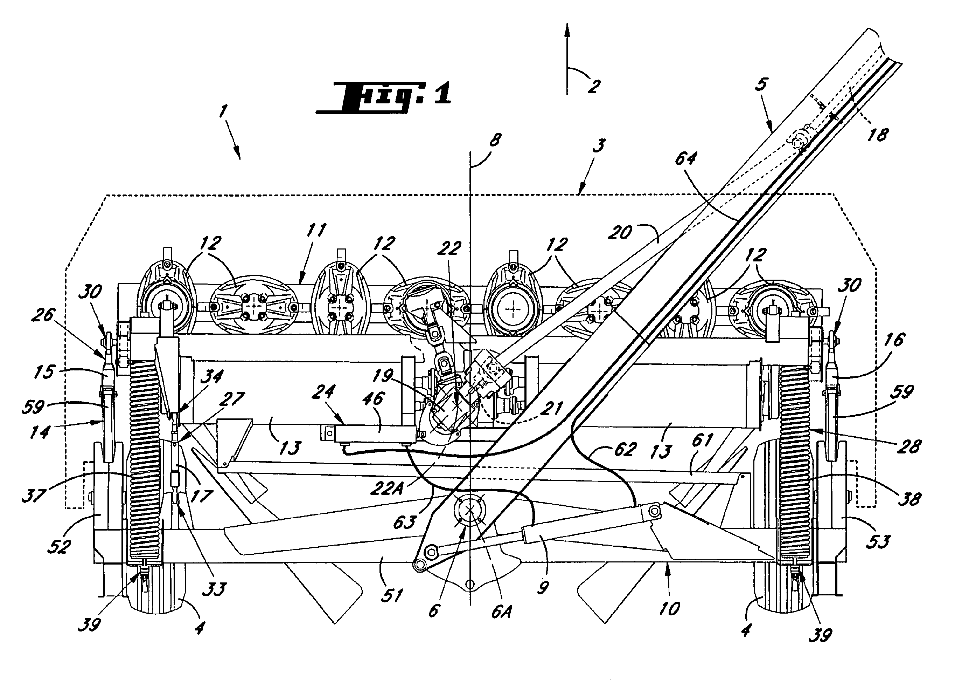

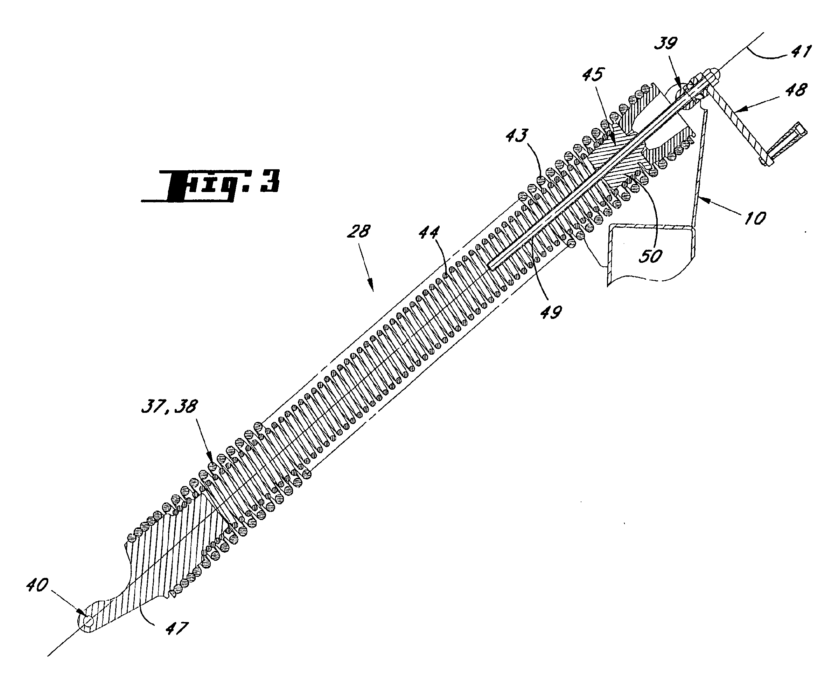

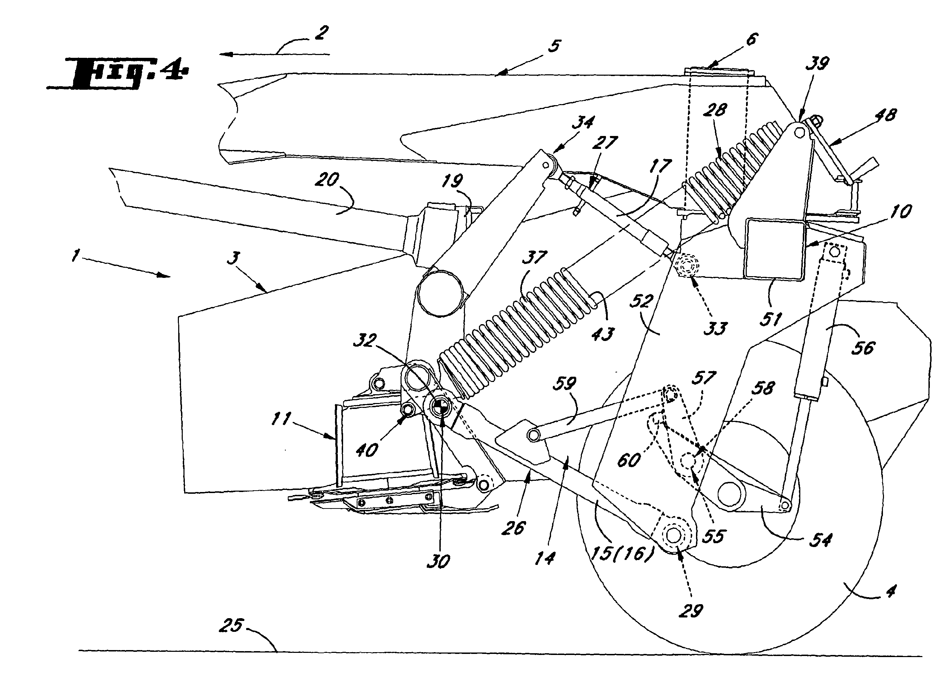

Les figures 1 à 5 montrent une machine agricole de coupe selon l'invention, réalisée sous forme de faucheuse-conditionneuse rotative (1). Celle-ci est attelée à un véhicule tracteur non représenté qui, durant l'utilisation, la tire dans le sens et la direction d'avance (2).

Dans la suite de la description, les notions suivantes "avant", "arrière", "devant" et "derrière" sont définies par rapport à ce sens d'avance (2) et les notions "droite" et "gauche" sont définies en regardant la faucheuse-conditionneuse (1) de l'arrière dans le sens d'avance (2).

Cette faucheuse-conditionneuse (1) se compose d'un corps (3) roulant sur le sol (25) au moyen de deux roues (4), et d'un timon (5) destiné à être lié, à son extrémité avant, audit véhicule tracteur d'une manière connue d'un homme du métier. Ledit timon (5) est par ailleurs lié à son extrémité arrière au corps (3) à l'aide d'une articulation (6) d'axe géométrique (6A) dirigé vers le haut (dans l'exemple représenté, cet axe géométrique (6A) est sensiblement vertical et s'étend sensiblement dans le plan vertical médian (8) du corps (3), dirigé suivant la direction d'avance (2)). La position angulaire du timon (5) par rapport au corps (3) peut être modifiée en faisant pivoter le timon (5) autour de l'axe géométrique (6A) de l'articulation (6). La mise dans la position angulaire souhaitée et le maintien dans celle-ci sont réalisés par un vérin de manoeuvre hydraulique (9) articulé entre le timon (5) et le corps (3). Grâce à cet agencement, le corps (3) de la faucheuse-conditionneuse (1) peut, notamment au travail, s'étendre à gauche ou à droite du véhicule tracteur. Ceci autorise le fauchage en aller et retour.

Le corps (3) de la faucheuse-conditionneuse (1) comporte tout d'abord un châssis (10) qui s'appuie sur le sol (25) au moyen des deux roues (4) lesquelles s'étendent chacune près d'une extrémité longitudinale respective dudit châssis (10). Le corps (3) de la faucheuse-conditionneuse (1) comporte par ailleurs un mécanisme de récolte (11) muni d'organes de coupe (12) (des disques rotatifs dans l'exemple représenté tournant chacun autour d'un axe respectif dirigé vers le haut) et d'organes de traitement (13) du produit coupé par les organes de coupe (12) (de tels organes de traitement (13) sont connus d'un homme du métier). Ce mécanisme de récolte (11) est lié au châssis (10) au moyen d'un dispositif de suspension (14) constitué d'un organe de suspension inférieur (26) et d'un organe de suspension supérieur (27) qui forment avec le châssis (10) et le mécanisme de récolte (11) un quadrilatère articulé lequel permet au mécanisme de récolte (11) de se déplacer essentiellement vers le haut et vers le bas par rapport au châssis (10) pour s'adapter au relief du sol (25) indépendamment dudit châssis (10).

L'animation du mécanisme de récolte (11) est réalisée, par exemple, à partir de la prise de force du véhicule tracteur d'une manière connue par un homme du métier. Le mouvement arrive ainsi par un arbre (18) supporté par le timon (5) et est transmis à un carter de renvoi (19) par un arbre de transmission télescopique (20) à joints universels implanté entre ledit arbre (18) et l'arbre d'entrée (21) dudit carter de renvoi (19). Ce dernier est lié au mécanisme de récolte (11) et communique le mouvement à des organes d'entraînement des organes de coupe (12) et des organes de traitement (13), non représentés dans le détail, mais bien décrits dans la demande de brevet FR 96 09351.

Ledit carter de renvoi (19) est lié au mécanisme de récolte (11) au moyen d'une articulation (22) d'axe géométrique (22A) dirigé vers le haut (dans l'exemple représenté, cet axe (22A) est sensiblement parallèle à l'axe (6A) et s'étend devant cet axe (6A); il s'étend par ailleurs légèrement à gauche du plan vertical médian (8)). Grâce à cette articulation (22), l'arbre d'entrée (21) du carter de renvoi (19) est toujours dirigé vers l'extrémité avant du timon (5) quelle que soit la position angulaire qu'occupe ce dernier. Le placement et le maintien du carter de renvoi (19) dans la position angulaire adéquate sont réalisés par un moyen de pilotage (24) conforme à ceux faisant l'objet de la demande de brevet FR 96 04548 : le vérin de manoeuvre hydraulique (9) joue le rôle du premier vérin de pilotage implanté entre le timon (5) et le corps (3), et le deuxième vérin de pilotage (46) est implanté entre le corps (3) et le carter de renvoi (19) et est branché en série avec le vérin de manoeuvre hydraulique (9). Ces deux vérins hydrauliques (9, 46) sont à double effet.

La faucheuse-conditionneuse (1) comporte également un dispositif (28) d'allégement du mécanisme de récolte (11) destiné à reporter une partie du poids du mécanisme de récolte (11) sur le châssis (10).

L'organe de suspension inférieur (26) comporte deux bielles de suspension inférieures (15, 16) s'étendant chacune dans le voisinage d'une extrémité longitudinale respective du mécanisme de récolte (11). Chaque bielle de suspension inférieure (15, 16) est liée au châssis (10) au moyen d'une première articulation respective (29) et au mécanisme de récolte (11) au moyen d'une deuxième articulation respective (30). En outre, les premières articulations (29) s'étendent, notamment en position de travail normale, avantageusement plus près du sol (25) que les deuxièmes articulations (30). De ce fait, chaque bielle de suspension inférieure (15, 16) est, en vue de côté, inclinée vers l'avant et vers le haut.

Du reste, les deuxièmes articulations (30) des bielles de suspension inférieures (15, 16) s'étendent à la verticale au-dessus de patins (31) par l'intermédiaire desquels le mécanisme de récolte (11) glisse sur le sol (25).

Les premières articulations (29) et les deuxièmes articulations (30) des deux bielles de suspension inférieures (15, 16) présentent également chacune un axe géométrique respectif (29A, 30A) sensiblement horizontal et transversal à la direction d'avance (2) (dans l'exemple représenté, les axes géométriques (29A, 30A) s'étendent sensiblement perpendiculairement à la direction d'avance (2)). Les axes géométriques (29A) des premières articulations (29) sont sensiblement confondus. Il en est de même des axes géométriques (30A) des deuxièmes articulations (30). En outre, les axes géométriques (30A) des deuxièmes articulations (30) des deux bielles de suspension inférieures (15, 16) passent, conformément à l'invention, par le centre des masses (32) du mécanisme de récolte (11).

En ce qui concerne l'organe de suspension supérieur (27), celui-ci est constitué d'une bielle de suspension supérieure (17) s'étendant également dans le voisinage de l'une des extrémités longitudinales du mécanisme de récolte (11) (dans l'exemple représenté, il s'agit de l'extrémité longitudinale gauche du mécanisme de récolte (11) et du châssis (10)). La bielle de suspension supérieure (17) est liée au châssis (10) au moyen d'une première articulation (33) et au mécanisme de récolte (11) au moyen d'une deuxième articulation (34). En outre, dans cet exemple de réalisation, la première articulation (33) s'étend, notamment en position de travail normale, également plus bas que la deuxième articulation (34). De ce fait, la bielle de suspension supérieure (17) est aussi, en vue de côté, inclinée vers l'avant et vers le haut. Du reste, cette première articulation (33) et cette deuxième articulation (34) présentent chacune un axe géométrique respectif (33A, 34A) sensiblement horizontal et transversal à la direction d'avance (2). En fait, ces axes géométriques (33A, 34A) sont sensiblement parallèles aux axes géométriques (29A, 30A) des premières articulations (29) et des deuxièmes articulations (30) des deux bielles de suspension inférieures (15, 16).

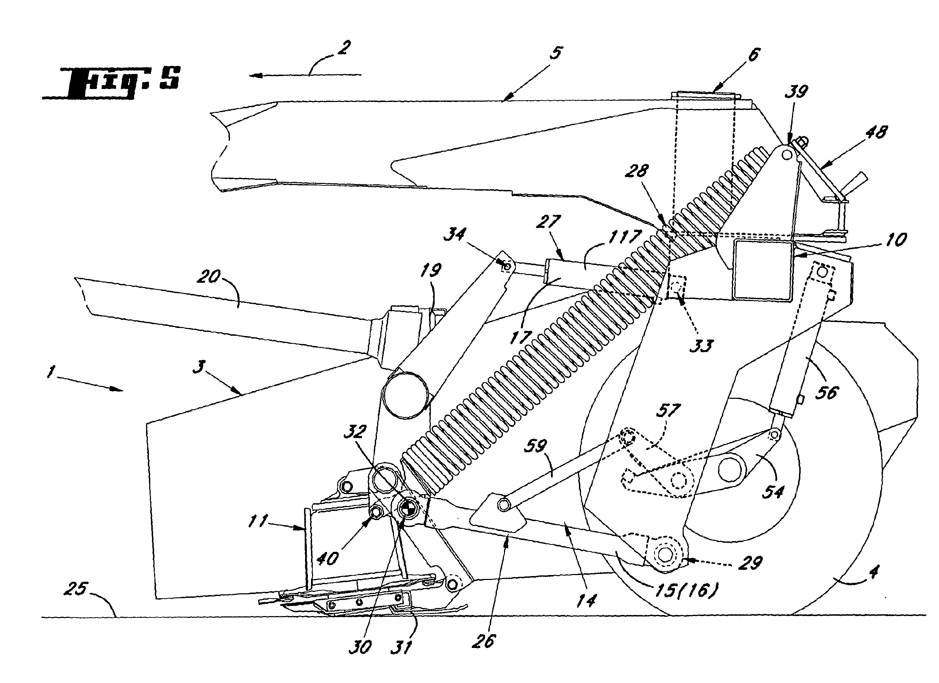

Cette bielle de suspension supérieure (17) est, dans l'exemple représenté, formée par un vérin mécanique de sorte que sa longueur puisse être variée en vue du réglage de l'angle de coupe (35) des organes de coupe (12). Cet angle de coupe (35) est l'angle que forme le plan (12') dans lequel évoluent les organes de coupe (12), avec le sol horizontal (25). Sur la figure 5, la bielle de suspension supérieure (17) est formée par un vérin hydraulique (117).

On notera, en outre, que, grâce à l'implantation des deuxièmes articulations (30) des deux bielles de suspension inférieures (15, 16) à la verticale des patins (31) et grâce à la forme de ces derniers, la hauteur desdites deuxièmes articulations (30) ne varie que très peu par rapport au sol (25) lors du réglage de l'angle de coupe (35).

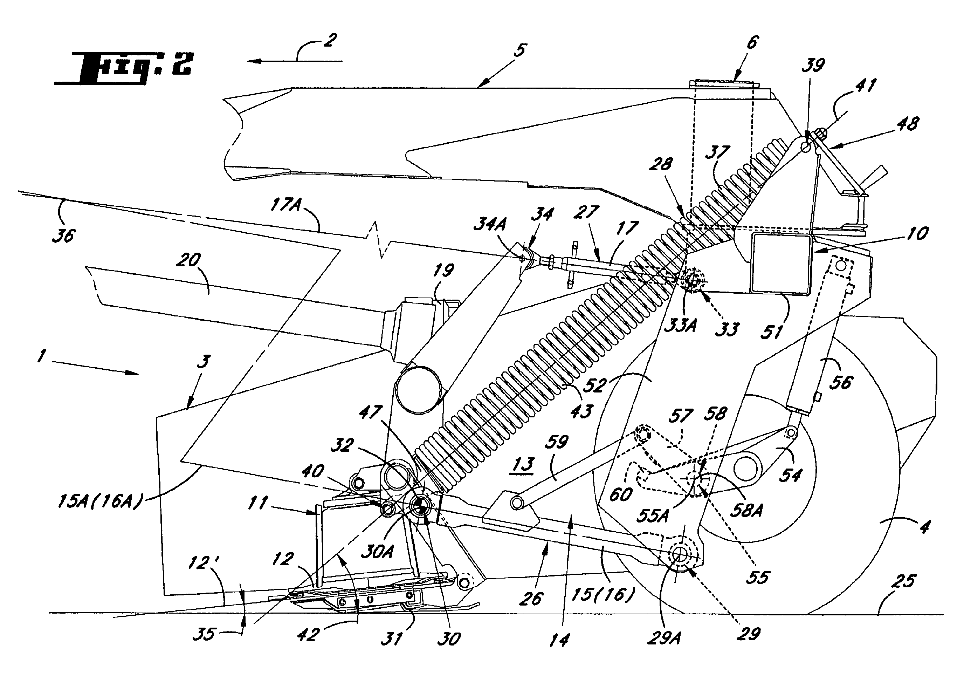

Comme visible sur les figures 2 à 5, les bielles de suspension inférieures (15, 16) sont plus longues que la bielle de suspension supérieure (17). En outre, l'axe longitudinal respectif (15A, 16A) des bielles de suspension inférieures (15, 16) et l'axe longitudinal (17A) de la bielle de suspension supérieure (17) convergent en un point de convergence (36) situé en avant du mécanisme de récolte (11) et au-dessus du sol (25) (l'axe longitudinal respectif (15A, 16A) des deux bielles de suspension inférieures (15, 16) est celui passant par les axes géométriques (29A, 30A) des premières articulations (29) et des deuxièmes articulations (30) desdites bielles de suspension inférieures (15, 16), tandis que l'axe longitudinal (17A) de la bielle de suspension supérieure (17) est celui passant par l'axe géométrique (33A, 34A) de la première articulation (33) et de la deuxième articulation (34) de ladite bielle de suspension supérieure (17)).

Le dispositif (28) d'allégement du mécanisme de récolte (11) comporte deux organes élastiquement déformables (37, 38) s'étendant chacun dans le voisinage d'une extrémité longitudinale respective du mécanisme de récolte (11). Chaque organe élastiquement déformable (37, 38) est lié au châssis (10) au moyen d'une première liaison (39) et au mécanisme de récolte (11) au moyen d'une deuxième liaison (40). Cette deuxième liaison (40) s'étend dans le voisinage de l'axe géométrique (30A) de la deuxième articulation (30) qui lie la bielle de suspension inférieure correspondante (15, 16) au mécanisme de récolte (11), de telle manière que l'axe longitudinal (41) dudit organe élastiquement déformable (37, 38) coupe pratiquement l'axe géométrique (30A) de ladite deuxième articulation (30), lequel axe géométrique (30A) passe par le centre des masses (32) du mécanisme de récolte (11) (dans l'exemple représenté, ledit axe longitudinal (41) passe légèrement au-dessus de l'axe géométrique (30A)). La première liaison (39), quant à elle, est implantée sur le châssis (10) de telle manière que l'axe longitudinal (41) dudit organe élastiquement déformable (37, 38) fasse, en position de travail normale du mécanisme de récolte (11), un angle (42) d'environ 40° avec le sol horizontal (25).

Chaque organe élastiquement déformable (37, 38) est constitué de deux ressorts mécaniques de traction (43, 44) : un ressort extérieur (43) et un ressort intérieur (44) qui s'étend à l'intérieur du ressort extérieur (43). Chaque ressort extérieur (43) et son ressort intérieur (44) respectif sont liés, à leur extrémité longitudinale proche du châssis (10), à une première pièce de liaison commune (45) et, à leur extrémité longitudinale proche du mécanisme de récolte (11), à une deuxième pièce de liaison commune (47). Cette première pièce de liaison commune (45) est liée au châssis (10) au moyen de la première liaison (39) et la deuxième pièce de liaison commune (47) est liée au mécanisme de récolte (11) au moyen de la deuxième liaison (40). La première pièce de liaison commune (45) comporte en sus un organe commun (48) de réglage de la tension des ressorts (43, 44), c'est-à-dire de l'allégement du mécanisme de récolte (11). Dans l'exemple représenté, cet organe commun de réglage de l'allégement (48) est constitué d'une vis (49) qui est liée au châssis (10) par la première liaison (39) et qui est vissée dans une noix (50) de la première pièce de liaison commune (45). C'est à cette noix (50) que sont fixés les ressorts (43,44).

Le châssis (10) est constitué d'une poutre (51) sensiblement horizontale et transversale à la direction d'avance (2), et d'une jambe (52, 53) s'étendant, à chaque extrémité longitudinale de la poutre (51), vers le bas, en direction du sol (25).

Chaque bielle de suspension inférieure (15, 16) est liée à l'extrémité inférieure de la jambe (52, 53) respective au moyen de la première articulation (29) correspondante.

La bielle de suspension supérieure (17), quant à elle, est liée à la poutre (51) au moyen de sa première articulation (33).

Près de l'extrémité inférieure de chaque jambe (52, 53) est également lié un bras de roue (54) qui supporte la roue (4) correspondante. Chaque bras de roue (54) est lié à la jambe (52, 53) correspondante au moyen d'une articulation (55) d'axe géométrique (55A) sensiblement horizontal et transversal à la direction d'avance (2) (dans l'exemple représenté, l'axe géométrique (55A) est sensiblement perpendiculaire à la direction d'avance (2)). Les axes géométriques (55A) des articulations (55) des deux bras de roue (54) sont sensiblement confondus. En outre, chaque articulation (55) s'étend sensiblement à la verticale au-dessus de la première articulation (29) liant la bielle de suspension inférieure (15, 16) à la jambe (52, 53) correspondante.

Entre chaque bras de roue (54) et le châssis (10) est par ailleurs prévu un vérin hydraulique (56) qui permet de faire pivoter ledit bras de roue (54) et la roue (4) correspondante par rapport au châssis (10) autour de l'axe géométrique (55A) de l'articulation (55) correspondante. Ceci permet au châssis (10) d'être approché du sol (25) pendant la phase de coupe et d'être éloigné du sol (25) lorsque la coupe est interrompue.

A chaque jambe (52, 53) du châssis (10) est également lié un premier bras (57) au moyen d'une articulation (58) dont l'axe géométrique (58A) est ici sensiblement confondu avec l'axe géométrique (55A) de l'articulation (55) liant le bras de roue (54) correspondant à ladite jambe (52, 53). Un deuxième bras (59) est, en outre, articulé entre ledit premier bras (57) et la bielle de suspension inférieure (15, 16) correspondante. Le bras de roue (54) correspondant, quant à lui, est prolongé vers l'avant au-delà de l'articulation (55) le liant à la jambe (52, 53). A son extrémité avant, ledit bras de roue (54) comporte un appui (60) s'étendant transversalement à la direction d'avance (2) jusque sous le premier bras (57) correspondant. Cet appui (60) est destiné à venir en contact avec ledit premier bras (57) lorsque le châssis (10) doit être éloigné du sol (25). En position de travail normale, il existe cependant un certain jeu entre ledit appui (60) et le premier bras (57) correspondant.

La faucheuse-conditionneuse (1) qui vient d'être décrite, fonctionne de la manière suivante.

Au travail, le châssis (10) est abaissé. Le mécanisme de récolte (11) repose sur le sol(25) au moyen des patins (31). Le véhicule tracteur (non représenté) auquel est liée ladite faucheuse-conditionneuse (1), la tire dans la direction d'avance (2) et anime les organes de coupe (12) et les organes de traitement (13). En avançant, les organes de coupe (12) coupent le produit à couper. Celui-ci est transféré aux organes de traitement (13) qui lui font subir le traitement prévu et le déposent ensuite sur le sol (25) derrière la machine.

Grâce au dispositif de suspension (14), le mécanisme de récolte (11) peut suivre les dénivellations du sol (25). Le mécanisme de récolte (11) peut tout d'abord se déplacer vers le haut et vers le bas par rapport au châssis (10) par déformation du quadrilatère articulé que forment les deux bielles de suspension inférieures (15, 16) et la bielle de suspension supérieure (17) avec le châssis (10) et le mécanisme de récolte (11). Il convient de rappeler, qu'en position de travail normale, l'appui (60) de chaque bras de roue (54) est quelque peu éloigné du premier bras (57) pour permettre justement au mécanisme de récolte (11) de se déplacer vers le bas par rapport au châssis (10). Mais, le mécanisme de récolte (11) peut aussi quelque peu pivoter autour d'un axe parallèle à la direction d'avance (2). Les premières articulations (29, 33) et les deuxièmes articulations (30, 34) des deux bielles de suspension inférieures (15, 16) et de la bielle de suspension supérieure (17) permettent en effet une telle rotation. Dans la réalisation représentée, ces articulations (29, 30, 33, 34) sont du type rotule, une barre transversale (61) articulée entre le châssis (10) et le mécanisme de récolte (11), empêchant le déplacement du mécanisme de récolte (11) transversalement à la direction d'avance (2) au travail.

Le dispositif d'allégement (28) reporte une grande partie du poids du mécanisme de récolte (11) sur le châssis (10). L'intensité de cet allégement peut être réglée grâce au mécanisme de réglage constitué par les deux organes communs (48) de réglage de la tension des ressorts (43, 44). Compte tenu de l'implantation des ressorts (43, 44), la valeur de l'allégement procuré par ceux-ci reste relativement constante dans la plage de déplacement du mécanisme de récolte (11) durant le travail pour suivre les dénivellations du sol (25).

En outre, le mécanisme de récolte (11) est également soumis à un allégement dynamique qui s'ajoute à l'allégement procuré par les ressorts (43, 44). En effet, lors du travail, la résistance à l'avancement créée par le frottement du mécanisme de récolte (11) sur le sol (25), génère un couple d'allégement par rapport au point de convergence (36) de l'organe de suspension inférieur (26) et de l'organe de suspension supérieur (27).

Pour éloigner le châssis (10) et le mécanisme de récolte (11) du sol (25), l'utilisateur alimente les vérins hydrauliques (56) en huile depuis le véhicule tracteur. Ce faisant, chaque vérin hydraulique (56) s'allonge et fait pivoter la partie arrière du bras de roue (54) correspondant vers le bas par rapport au châssis (10), ledit pivotement s'effectuant autour de l'axe géométrique (55A) de l'articulation (55) liant ledit bras de roue (54) au châssis (10). Comme la roue (4) correspondante est en appui sur le sol (25), c'est le châssis (10) qui se soulève. Parallèlement, l'extrémité avant dudit bras de roue (54) pivote vers le haut par rapport au châssis (10). Lorsque l'appui (60) dudit bras de roue (54) arrive en contact avec le premier bras (57) correspondant, celui-ci pivote également vers le haut par rapport au châssis (10), ledit pivotement s'effectuant autour de l'axe géométrique (58A) de l'articulation (58) liant ledit premier bras (57) au châssis (10). En pivotant, ledit premier bras (57) tire sur le deuxième bras (59) correspondant, lequel fait pivoter, à son tour, la bielle de suspension inférieure (15, 16) correspondante vers le haut par rapport au châssis (10), ce pivotement s'effectuant autour de l'axe géométrique (29A) de la première articulation (29) liant ladite bielle de suspension inférieure (15, 16) au châssis (10).

On obtient ainsi une garde au sol substantielle lors du transport de la faucheuse-conditionneuse (1).

Dans le réglage représenté sur la figure 1, la faucheuse-conditionneuse (1) travaille à gauche du véhicule tracteur. En bout de champ, l'utilisateur injecte, à partir du véhicule tracteur, de huile dans une troisième conduite hydraulique (64) branchée sur le deuxième vérin de pilotage (46). Ceci a pour effet d'allonger ce deuxième vérin de pilotage (46) et de raccourcir le vérin de manoeuvre (9), car de l'huile contenue dans ledit deuxième vérin de pilotage (46) est transvasée dans le vérin de manoeuvre (9) au travers d'une deuxième conduite hydraulique (63) reliant ces deux vérins hydrauliques (9, 46). L'huile en surplus dans le vérin de manoeuvre (9) retourne au véhicule tracteur par une première conduite hydraulique (62). Ce faisant, le carter de renvoi (19) et le timon (5) pivotent dans leur deuxième position de travail dans laquelle la faucheuse-conditionneuse (1) travaillera à droite du véhicule tracteur.

On comprendra que pour repasser de la position de travail à droite du véhicule tracteur à la position de travail à gauche du véhicule tracteur, l'utilisateur injecte, à partir du véhicule tracteur, de l'huile dans la première conduite hydraulique (62). Ceci aura pour effet d'allonger le vérin de manoeuvre (9) et de raccourcir le deuxième vérin de pilotage (46), car de l'huile contenue dans ledit vérin de manoeuvre (9) est transvasée dans le deuxième vérin de pilotage (46) au travers de la deuxième conduite hydraulique (63). L'huile en surplus dans le deuxième vérin de pilotage (46) retourne au véhicule tracteur par la troisième conduite hydraulique (64). Ce faisant, le carter de renvoi (19) et le timon (5) retournent dans la première position de travail dans laquelle la faucheuse-conditionneuse (1) travaillera à nouveau à gauche du véhicule tracteur.

Pour le transport, le timon (5) est placé sensiblement suivant la direction d'avance (2).

Durant le transport, le mécanisme de récolte (11) est essentiellement supporté par les deux bielles de suspension inférieures (15, 16). La bielle de suspension supérieure (17) n'est quasiment pas sollicitée.

Durant le travail, le mécanisme de récolte (11) a une stabilité remarquable.

Le réglage de l'angle de coupe (35) est très facile et se fait avec un minimum d'effort.

La bielle de suspension supérieure (17) a pu être implantée près d'une extrémité longitudinale du mécanisme de récolte (11) et du châssis (10). Elle est donc très facilement accessible pour effectuer ledit réglage de l'angle de coupe (35). En outre, cette implantation permet de dégager la partie centrale du mécanisme de récolte (11) et du châssis (10) où sont déjà articulés le carter de renvoi (19) et le timon (5).

La faucheuse-conditionneuse (1) qui vient d'être décrite n'est qu'un exemple de réalisation qui ne saurait en aucun cas limiter le domaine de protection défini par les revendications suivantes.

## Revendications

1. Machine agricole de coupe (1) destinée à être déplacée suivant une direction de travail (2) et comportant :
- un châssis (10),
- un mécanisme de récolte (11) destiné à reposer sur le sol (25) durant le travail, ledit mécanisme de récolte (11) étant muni d'organes de coupe (12) et d'organes de traitement (13) du produit coupé, ledit mécanisme de récolte (11) présentant un centre des masses (32),
- un dispositif de suspension (14) liant ledit mécanisme de récolte (11) au châssis (10) et comportant un organe de suspension inférieur (26) et un organe de suspension supérieur (27) formant un quadrilatère articulé qui permet au mécanisme de récolte (11) de se déplacer par rapport au châssis (10), ledit organe de suspension inférieur (26) et ledit organe de suspension supérieur (27) étant liés chacun au châssis (10) au moyen d'une première articulation respective (29, 33) et au mécanisme de récolte (11) au moyen d'une deuxième articulation respective (30, 34), lesdites premières articulations (29, 33) et lesdites deuxièmes articulations (30, 34) présentant chacune un axe géométrique (29A, 33A, 30A, 34A) sensiblement horizontal et transversal à la direction de travail (2),
- un dispositif (28) d'allégement du mécanisme de récolte reportant une partie du poids dudit mécanisme de récolte (11) sur le châssis (10),
***caractérisée en ce* que** l'axe géométrique (30A) de la deuxième articulation (30) de l'organe de suspension inférieur (26) passe par le centre des masses (32) du mécanisme de récolte (11) et que le dispositif d'allégement (28) est lié au mécanisme de récolte (11) au niveau ou dans le voisinage dudit axe géométrique (30A) de manière à ce que l'axe longitudinal (41) dudit dispositif d'allégement (28) coupe pratiquement cet axe géométrique (30A).

2. Machine agricole de coupe selon la revendication 1, ***caractérisée en ce* que** l'organe de suspension supérieur (27) ou le châssis (10) ou le mécanisme de récolte (11) comporte un moyen permettant de régler l'angle de coupe (35) des organes de coupe (12).

3. Machine agricole de coupe selon la revendication 2, ***caractérisée en ce* que** l'organe de suspension supérieur (27) est de longueur variable.

4. Machine agricole de coupe selon l'une quelconque des revendications 1 à 3, ***caractérisée en ce* que** la deuxième articulation (30) de l'organe de suspension inférieur (26) s'étend au-dessus de la zone de contact du mécanisme de récolte (11) avec le sol (25).

5. Machine agricole de coupe selon la revendication 4, ***caractérisée en ce* que** la deuxième articulation (30) de l'organe de suspension inférieure (26) s'étend à la verticale ou sensiblement à la verticale de la zone de contact du mécanisme de récolte (11) avec le sol (25).

6. Machine agricole de coupe selon l'une quelconque des revendications 1 à 5, ***caractérisée en ce* que** :
- l'organe de suspension inférieur (26) comporte deux bielles de suspension inférieures (15, 16) s'étendant chacune dans le voisinage d'une extrémité longitudinale respective du mécanisme de récolte (11), et
- l'organe de suspension supérieur (27) est constitué d'une bielle de suspension supérieure (17).

7. Machine agricole de coupe selon la revendication 6, ***caractérisée en ce* que** la bielle de suspension supérieure (17) s'étend dans le voisinage de l'une des extrémités longitudinales du mécanisme de récolte (11).

8. Machine agricole de coupe selon la revendication 6 ou 7 prise en combinaison avec la revendication 3, ***caractérisée en ce* que** la bielle de suspension supérieure (17) est formée par un vérin.

9. Machine agricole de coupe selon la revendication 8, ***caractérisée en ce* que** le vérin est un vérin hydraulique (117).

10. Machine agricole de coupe selon l'une quelconque des revendications 1 à 9, ***caractérisée en ce* que** l'organe de suspension inférieur (26) est plus long que l'organe de suspension supérieur (27).

11. Machine agricole de coupe selon l'une quelconque des revendications 1 à 10, ***caractérisée en ce* que** l'organe de suspension inférieur (26) et l'organe de suspension supérieur (27) forment un quadrilatère articulé et convergent en un point de convergence (36) situé en avant du mécanisme de récolte (11) et au-dessus du sol (25).

12. Machine agricole de coupe selon la revendication 1, ***caractérisée en ce* que** le dispositif d'allégement (28) comporte un mécanisme (48) de réglage de l'intensité de l'allégement.

13. Machine agricole de coupe selon l'une quelconque des revendications 1 et 12, ***caractérisée en ce* que** le dispositif d'allégement (28) comporte au moins un organe (37, 38) élastiquement déformable suivant son axe longitudinal (41).

14. Machine agricole de coupe selon la revendication 13, ***caractérisée en ce* que** l'axe longitudinal (41) dudit au moins un organe élastiquement déformable (37, 38) fait, en position de travail normale du mécanisme de récolte (11), un angle (42) compris entre 25° et 55° par rapport à un plan horizontal.

15. Machine agricole de coupe selon la revendication 13 ou 14, ***caractérisée en ce* que** le dispositif d'allégement (28) comporte au moins un organe élastiquement déformable (37, 38) à chaque extrémité longitudinale du mécanisme de récolte (11).

16. Machine agricole de coupe selon l'une quelconque des revendications 13 à 15, ***caractérisée en ce* que** ledit au moins un organe élastiquement déformable (37, 38) est constitué d'au moins un ressort mécanique de traction (43,44).

17. Machine agricole de coupe selon la revendication 16, ***caractérisée en ce* que** ledit au moins un organe élastiquement déformable (37, 38) est constitué de deux ressorts mécaniques de traction (43, 44) s'étendant l'un dans l'autre.

18. Machine agricole de coupe selon la revendication 16 ou 17 combinée avec la revendication 12, ***caractérisée en ce* que** le mécanisme de réglage de l'allégement comporte un organe (48) de réglage de l'allégement commun à tous les ressorts mécaniques de traction (43, 44) d'un même organe élastiquement déformable (37, 38).

19. Machine agricole de coupe selon l'une quelconque des revendications 1 à 18, ***caractérisée en ce* que** le châssis (10) s'appuie sur le sol (25) au moyen de roues (4) articulées chacune sur le châssis (10) à l'aide d'un bras de roue (54) respectif, et qu'il est prévu un vérin hydraulique (56) implanté entre chaque bras de roue (54) et le châssis (10) pour soulever ledit châssis (10) en vue du transport notamment.

20. Machine agricole de coupe selon la revendication 19 ***caractérisée en ce* que** les vérins hydrauliques (56) agissent également directement ou indirectement sur l'organe de suspension inférieur (26).

21. Machine agricole de coupe selon l'une quelconque des revendications 1 à 20, ***caractérisée en ce* que** c'est une faucheuse rotative.

## Claims

1. Agricultural cutting machine (1) intended to be moved in a direction of work (2) and comprising:
- a chassis (10),
- a harvesting mechanism (11) intended to rest on the ground (25) during work, the said harvesting mechanism (11) being equipped with cutting members (12) and treatment members (13) for the cut product, the said harvesting mechanism (11) having a centre of mass (32),
- a suspension device (14) connecting the said harvesting mechanism (11) to the chassis (10) and comprising a lower suspension member (26) and an upper suspension member (27) forming an articulated quadrilateral which allows the harvesting mechanism (11) to move relative to the chassis (10), the said lower suspension member (26) and the said upper suspension member (27) each being connected to the chassis (10) by means of a first respective articulation (29, 33) and to the harvesting mechanism (11) by means of a second respective articulation (30, 34), the said first articulations (29, 33) and the said second articulations (30, 34) each having a geometric axis (29A, 33A, 30A, 34A) which is substantially horizontal and transverse to the direction of work (2),
- a device (28) for lightening the harvesting mechanism transferring some of the weight of the said harvesting mechanism (11) onto the chassis (10),
***characterized in* that** the said geometric axis (30A) of the second articulation (30) of the lower suspension member (26) passes through the centre of mass (32) of the harvesting mechanism (11) and ***in* that** the lightening device (28) is connected to the harvesting mechanism (11) at the or near the said geometric axis (30A) in order that the longitudinal axis (41) of the said lightening device (28) practically intersects this geometric axis (30A).

2. Agricultural cutting machine according to Claim 1, ***characterized in* that** the upper suspension member (27) or the chassis (10) or the harvesting mechanism (11) comprises a means allowing the cutting angle (35) of the cutting members (12) to be adjusted.

3. Agricultural cutting machine according to Claim 2, ***characterized in* that** the upper suspension member (27) is of variable length.

4. Agricultural cutting machine according any one of Claims 1 to 3, ***characterized in* that** the second articulation (30) of the lower suspension member (26) extends above the region in which the harvesting mechanism (11) contacts the ground (25).

5. Agricultural cutting machine according to Claim 4, ***characterized in* that** the second articulation (30) of the lower suspension member (26) extends vertically or substantially vertically to the region in which the harvesting mechanism (11) contacts the ground (25).

6. Agricultural cutting machine according to any one of Claims 1 to 5, ***characterized in* that**:
- the lower suspension member (26) comprises two lower suspension rods (15, 16) each one extending near a respective longitudinal end of the harvesting mechanism (11), and
- the upper suspension member (27) consists of an upper suspension rod (17).

7. Agricultural cutting machine according to Claim 6, ***characterized in* that** the upper suspension rod (17) extends near to one of the longitudinal ends of the harvesting mechanism (11).

8. Agricultural cutting machine according to Claim 6 or 7 taken in combination with Claim 3, ***characterized in* that** the upper suspension rod (17) is formed of a ram.

9. Agricultural cutting machine according to Claim 8, ***characterized in* that** the ram is a hydraulic ram (117).

10. Agricultural cutting machine according to any one of Claims 1 to 9, ***characterized in* that** the lower suspension member (26) is longer than the upper suspension member (27).

11. Agricultural cutting machine according to any one of Claims 1 to 10, ***characterized in* that** the lower suspension member (26) and the upper suspension member (27) form an articulated quadrilateral and converge to a point of convergence (36) situated forward of the harvesting mechanism (11) and above the ground (25).

12. Agricultural cutting machine according to Claim 1, ***characterized in* that** the lightening device (28) comprises a mechanism (48) for adjusting the lightening intensity.

13. Agricultural cutting machine according to any one of Claims 1 to 12, ***characterized in* that** the lightening device (28) comprises at least one member (37, 38) which is elastically deformable along its longitudinal axis (41).

14. Agricultural cutting machine according to Claim 13, ***characterized in* that** the longitudinal axis (41) of the said at least one elastically deformable member (37, 38) makes, in the normal work position of the harvesting mechanism (11), an angle (42) of between 25° and 55° with respect to a horizontal plane.

15. Agricultural cutting machine according to Claim 13 or 14, ***characterized in* that** the lightening device (28) comprises at least one elastically deformable member (37, 38) at each longitudinal end of the harvesting mechanism (11).

16. Agricultural cutting machine according to any one of Claims 13 to 15, ***characterized in* that** the at least one elastically deformable member (37, 38) consists of at least one mechanical draw-spring (43, 44).

17. Agricultural cutting machine according to Claim 16, ***characterized in* that** the at least one elastically deformable member (37, 38) consists of two mechanical draw-springs (43, 44) extending one inside the other.

18. Agricultural cutting machine according to Claim 16 or 17 combined with Claim 12, ***characterized in* that** the mechanism for adjusting the lightening comprises a member (48) for adjusting the lightening which is common to all the mechanical draw-springs (43, 44) of one same elastically deformable member (37, 38).

19. Agricultural cutting machine according to any one of Claims 1 to 18, ***characterized in* that** the chassis (10) rests on the ground (25) by means of wheels (4) each articulated to the chassis (10) by means of a respective wheel arm (54), and ***in* that** a hydraulic ram (56) is situated between each wheel arm (54) and the chassis (10) in order to raise the said chassis (10) particularly for the purpose of transport.

20. Agricultural cutting machine according to Claim 19, ***characterized in* that** the hydraulic rams (56) also act directly or indirectly on the lower suspension member (26).

21. Agricultural cutting machine according to any one of Claims 1 to 20, ***characterized in* that** it is a rotary mower.

## Patentansprüche

1. Landwirtschaftliche Mähmaschine (1), die dazu bestimmt ist, in eine Arbeitsrichtung (2) verschoben zu werden, und
- ein Gestell (10),
- einen Erntemechanismus (11), der dazu bestimmt ist, auf dem Boden (25) während der Arbeit aufzuliegen, wobei der Erntemechanismus (11) mit Schneidelementen (12) und Elementen (13) zur Behandlung des geschnittenen Produktes versehen ist, wobei der Erntemechanismus (11) ein Massenmittelpunkt (32) aufweist,
- eine Aufllängungsvorrichtung (14), die den Erntemechanismus (11) mit dem Gestell (10) verbindet und ein unteres Aufhängungselement (26) und ein oberes Aufhängungselement (27) umfasst, die ein gelenkiges Viereck bilden, das es dem Erntemechanismus (11) ermöglicht, sich in Bezug zum Gestell (10) zu bewegen, wobei das untere Aufhängungselement (26) und das obere Aufhängungselement (27) jeweils mit dem Gestell (10) mittels eines ersten jeweiligen Gelenks (29, 33) und mit dem Erntemechanismus (11) mittels eines zweiten jeweiligen Gelenks (30, 34) verbunden sind,
wobei die ersten Gelenke (29, 33) und die zweiten Gelenke (30, 34) jeweils eine im Wesentlichen horizontale und quer zur Arbeitsrichtung (2) verlaufende Achse (29A, 33A, 30A, 34A) aufweisen,
- eine Erleichterungsvorrichtung (28) des Erntemechanismus, die einen Teil des Gewichts des Erntemechanismus (11) auf das Gestell (10) überträgt, umfasst, ***dadurch gekennzeichnet,* dass** die geometrische Achse (30A) des zweiten Gelenks (30) des unteren Aufhängungselements (26) durch den Massenmittelpunkt (32) des Erntemechanismus (11) verläuft, und dass die Erleichterungsvorrichtung (28) mit dem Erntemechanismus (11) im Bereich oder in der Nähe der geometrischen Achse (30A) verbunden ist, so dass die Längsachse (41) der Erleichterungsvorrichtung (28) diese geometrische Achse (30A) praktisch schneidet.

2. Landwirtschaftliche Mähmaschine nach Anspruch 1, ***dadurch gekennzeichnet,* dass** das obere Aufhängungselement (27) oder das Gestell (10) oder der Erntemechanismus (11) ein Mittel umfasst, das es ermöglicht, den Mähwinkel (35) der Schneidelemente (12) einzustellen.

3. Landwirtschaftliche Mähmaschine nach Anspruch 2, ***dadurch gekennzeichnet,* dass** das obere Aufhängungselement (27) von variabler Länge ist.

4. Landwirtschaftliche Mähmaschine nach irgend einem der Ansprüche 1 bis 3, ***dadurch gekennzeichnet,* dass** sich das zweite Gelenk (30) des unteren Aufhängungselements (26) über der Kontaktzone des Erntemechanismus (11) mit dem Boden (25) erstreckt.

5. Landwirtschaftliche Mähmaschine nach Anspruch 4, ***dadurch gekennzeichnet,* dass** sich das zweite Gelenk (30) des unteren Aufhängungselements (26) in der Vertikalen oder im Wesentlichen in der Vertikalen der Kontaktzone des Erntemechanismus (11) mit dem Boden (25) erstreckt.

6. Landwirtschaftliche Mähmaschine nach irgend einem der Ansprüche 1 bis 5, ***dadurch gekennzeichnet,* dass**:
- das untere Aufhängungselement (26) zwei untere Aufhängungsstangen (15, 16) umfasst, die sich jeweils in der Nähe eines jeweiligen Längsendes des Erntemechanismus (11) erstrecken, und
- das obere Aufhängungselement (27) von einer oberen Aufhängungsstange (17) gebildet ist.

7. Landwirtschaftliche Mähmaschine nach Anspruch 6, ***dadurch gekennzeichnet,* dass** sich die obere Aufhängungsstange (17) in der Nähe eines der Längsenden des Erntemechanismus (11) erstreckt.

8. Landwirtschaftliche Mähmaschine nach Anspruch 6 oder 7 in Kombination mit Anspruch 3, ***dadurch gekennzeichnet,* dass** die obere Aufhängungsstange (17) von einem Zylinder gebildet ist.

9. Landwirtschaftliche Mähmaschine nach Anspruch 8, ***dadurch gekennzeichnet,* dass** der Zylinder ein Hydraulikzylinder (117) ist.

10. Landwirtschaftliche Mähmaschine nach irgend einem der Ansprüche 1 bis 9, ***dadurch gekennzeichnet,* dass** das untere Aufhängungselement (26) länger als das obere Aufhängungselement (27) ist.

11. Landwirtschaftliche Mähmaschine nach irgend einem der Ansprüche 1 bis *10,* ***dadurch gekennzeichnet,* dass** das untere Aufhängungselement (26) und das obere Aufhängungselement (27) ein gelenkiges Viereck bilden und in einem Konvergenzpunkt (36) zusammenlaufen, der sich vorne am Erntemechanismus (11) und über dem Boden (25) befindet.

12. Landwirtschaftliche Mähmaschine nach Anspruch 1, ***dadurch gekennzeichnet,* dass** die Erleichterungsvorrichtung (28) einen Mechanismus (48) zur Einstellung der Stärke der Erleichterung umfasst.

13. Landwirtschaftliche Mähmaschine nach irgend einem der Ansprüche 1 und *12,* ***dadurch gekennzeichnet,* dass** die Erleichterungsvorrichtung (28) mindestens ein entlang seiner Längsachse (41) elastisch verformbares Element (37, 38) umfasst.

14. Landwirtschaftliche Mähmaschine nach Anspruch 13, ***dadurch gekennzeichnet,* dass** die Längsachse (41) des mindestens einen elastisch verformbaren Elements (37, 38) in normaler Arbeitsposition des Erntemechanismus (11) einen Winkel (42) zwischen 25° und 55° zu einer Horizontalebene bildet.

15. Landwirtschaftliche Mähmaschine nach Anspruch 13 oder 14, ***dadurch gekennzeichnet,* dass** die Erleichterungsvorrichtung (28) mindestens ein elastisch verformbares Element (37, 38) an jedem Längsende des Erntemechanismus (11) umfasst.

16. Landwirtschaftliche Mähmaschine nach irgend einem der Ansprüche 13 bis *15,* ***dadurch gekennzeichnet,* dass** das mindestens eine elastisch verformbare Element (37, 38) von mindestens einer mechanischen Zugfeder (43, 44) gebildet ist.

17. Landwirtschaftliche Mähmaschine nach Anspruch 16, ***dadurch gekennzeichnet,* dass** das mindestens eine elastisch verformbare Element (37, 38) von zwei mechanischen Zugfedern (43, 44) gebildet ist, die sich ineinander erstrecken.

18. Landwirtschaftliche Mähmaschine nach Anspruch 16 oder 17 in Kombination mit Anspruch 12, ***dadurch gekennzeichnet,* dass** der Mechanismus zur Einstellung der Erleichterung ein Element (48) zur Einstellung der Erleichterung umfasst, das allen mechanischen Zugfedern (43, 44) eines selben elastisch verformbaren Elements (37, 38) gemeinsam ist.

19. Landwirtschaftliche Mähmaschine nach irgend einem der Ansprüche 1 bis 18, ***dadurch gekennzeichnet,* dass** sich das Gestell (10) am Boden (25) mittels Rädern (4) abstützt, die jeweils am Gestell (10) mittels eines jeweiligen Radarms (54) angelenkt sind, und dass ein Hydraulikzylinder (56) vorgesehen ist, der zwischen jedem Radarm (54) und dem Gestell (10) angeordnet ist, um das Gestell (10) insbesondere für den Transport anzuheben.

20. Landwirtschaftliche Mähmaschine nach Anspruch 19, ***dadurch gekennzeichnet,* dass** die Hydraulikzylinder (56) auch direkt oder indirekt auf das untere Aufhängungselement (26) einwirken.

21. Landwirtschaftliche Mähmaschine nach irgend einem der Ansprüche 1 bis *20,* ***dadurch gekennzeichnet,* dass** es sich um eine Kreiselmähmaschine handelt.
